# EUROPEAN PATENT SPECIFICATION

(11) **EP 4 358 269 B1**
(45) Date of publication and mention of the grant of the patent: **11.11.2026**
(21) Application number: 22846130.7
(22) Date of filing: 13.07.2022
(51) Int. Cl.: H01M 50/383, H01M 50/358, H01M 50/213, H01M 10/658, H01M 50/249, H01M 50/367

(54) **BATTERY PACK**
BATTERIEPACK
BLOC-BATTERIE

(30) Priority: 22.07.2021 KR 20210096634
(43) Date of publication of application: 24.04.2024
(73) Proprietor: HD Construction Equipment Co., Ltd., Seongnam-si, Gyeonggi-do 13553 (KR)
(72) Inventor: JEON, Jae Seung, Incheon 21930 (KR)
(74) Representative: Isarpatent
(86) International application number: PCT/KR2022/010192
(87) International publication number: WO 2023/003260

(56) References cited:
- JP-B2- 6 847 864
- KR-A- 20190 094 921
- KR-A- 20200 021 609
- KR-A- 20210 004 189
- US-A1- 2016 093 842
- US-A1- 2019 020 001
- US-A1- 2019 379 018
- US-A1- 2020 227 708
- US-B2- 10 950 833

## Description

### [Technical Field]

The present invention relates to a battery pack and more particularly to a battery pack which, even if a spark or flame occurs in a specific battery cell, effectively blocks the spread of such a spark or flame to other battery cells, thereby preventing the risk that the entire battery pack is burned down and improving product stability.

### [Background Art]

A secondary battery which can be easily applied depending on a product group and has electrical characteristics such as high energy density is being generally used not only in portable devices but also in an electric vehicle (EV) or a hybrid electric vehicle (HEV) which is driven by an electrical drive source.

The secondary battery not only has a primary advantage of being able to significantly reduce the use of fossil fuels, but also does never generate any by-products due to energy use. In this respect, the secondary battery is attracting attention as a new energy source for improving eco-friendliness and energy efficiency.

The type of the secondary battery currently widely used includes a lithium-ion battery, a lithium polymer battery, a nickel cadmium battery, a nickel hydrogen battery, and a nickel zinc battery.

The operating voltage of such a unit secondary battery cell, that is, a unit battery cell, is approximately 2.5 V to 4.5 V. Therefore, when an output voltage higher than the operating voltage is required, a battery pack is formed by connecting in series a plurality of battery cells. Also, the battery pack may also be formed by connecting numbers of battery cells in parallel depending on a charge/discharge capacity required for the battery pack. Accordingly, the number of battery cells included in the battery pack may be variously set depending on the required output voltage or charge/discharge capacity.

However, recently, a fire breaks out one after another in an electric vehicle, an energy storage system (ESS), etc., attention is paid to this. In the eco-friendly era, while the electric vehicle, ESS, etc., are expected to be popular and in the spotlight, the fire problem is not completely solved yet.

The fire in the electric vehicle, ESS, etc., may occur when battery cells are overcharged due to problems with software settings, or when problems of the battery cell itself causes damage to the separator and the anode and cathode materials react or leak.

Typically, a plurality of battery cells is installed in a battery module constituting a battery pack. If a spark or flame occurs due to a problem in one of the battery cells, the spark or flame instantly spreads to other battery cells, so that the entire battery pack is burned down. As a result, the entire operating equipment equipped in the battery pack is burned down, resulting in untold cost loss. Also, this may cause even cause a casualty accident.

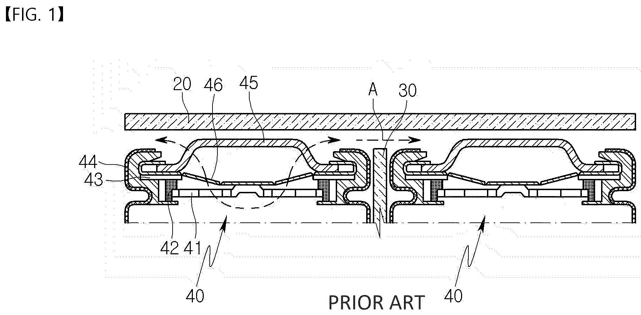

FIG. 1 is a view showing a partial cross-sectional structure of a conventional battery module on which a plurality of battery cells is mounted.

Referring to FIG. 1, one form of a conventional cylindrical battery cell 40 may include a current blocking device 41, a gasket 42, a thermal-resistant member 43, a shield 44, an upper cap 45, and a bent plate 46.

The current blocking device 41 may be a current interrupt device (CID), which may be a device that of which the temperature rises when an overcurrent flows and which automatically disconnects the contact point. Also, the gasket 42 may be disposed along the perimeter of the current blocking device 41 and may prevent leakage of internal materials of the battery cell.

The thermal-resistant member 43 may perform a function of protecting the battery cell 40 from external heat, and the shield 44 may form the exterior of the battery cell 40 and may perform a function of protecting the battery cell 40 from external impact.

The upper cap 45 may be disposed on the top of the battery cell 40 and may form an anode. The upper cap 45 may also perform a function of protecting the internal materials of the battery cell 40. Also, the bent plate 46 may be disposed between the upper cap 45 and the current blocking device 41.

A plurality of battery cells 40 may be disposed within the battery module, and the upper portion of the battery cell is surrounded by a module cover 20. Also, each battery cell 40 is arranged to be inserted by a cell holder 30.

However, in the case of the conventional structure, for example, when an abnormality occurs in a specific battery cell 40 on the left and the flame (arrow) occurs, the flame is not blocked and spreads to other battery cells 40 on the right. In this way, when the flame spreads to all of the battery cells 40, the battery pack is completely burned down, which becomes serious causes of damage to the operating equipment and of casualty accidents.

US 10,950,833 B2 discloses a battery packaging assembly having safety features that reduce the risk of thermal propagation.

### [DISCLOSURE]

### [Technical Problem]

The embodiment of the present invention is designed to overcome the above problems of related technical fields and the purpose of the present invention is to provide a battery pack which, even if a spark or flame occurs in a specific battery cell, effectively blocks the spread of such a spark or flame to other battery cells, thereby preventing the risk that the entire battery pack is burned down and improving product stability.

### [Technical Solution]

The invention is set out in the appended set of claims.

One embodiment is a battery pack according to claim 1, including: a plurality of battery cells; a module frame configured to receive the plurality of battery cells; and a partition wall configured to be disposed on at least a portion of a top or bottom of the module frame and to shield at least a portion of the battery cell. Even when a flame occurs in some battery cells among the plurality of battery cells, the partition wall blocks the flame from spreading to other battery cells.

The plurality of battery cells is arranged in a plurality of rows within the module frame. The partition wall is arranged on at least a portion of the top or bottom of the module frame in a plurality of rows at positions corresponding respectively to rows that the plurality of battery cells forms.

The partition wall includes: a center wall which is disposed between adjacent battery cells among the plurality of battery cells; a first shielding wall which is connected to one side of the center wall and is arranged in a row direction P formed by the plurality of battery cells; a second shielding wall which is connected to the other side of the center wall and is arranged in the row direction P formed by the plurality of battery cells; and a through portion which opens at least a portion of the battery cell and is disposed to be surrounded by the center wall and the first and second shielding walls.

The first shielding wall or the second shielding wall included in the partition wall which forms any one row among the partition walls arranged in the plurality of rows, and the first shielding wall or the second shielding wall included in the partition wall which forms another adjacent row may be arranged at different positions on the basis of the row direction P.

The partition wall further includes: a first recess formed in the first shielding wall; and a second recess formed in the second shielding wall.

The first recess and the second recess are disposed at different positions on the basis of the row direction P.

The first recess may be disposed adjacent to an anode of the battery cell in the first shielding wall, and the second recess may be disposed adjacent to a cathode of the battery cell in the second shielding wall.

The second shielding wall may be arranged on another adjacent partition wall facing the first recess formed in one of the partition walls arranged in the plurality of rows. The first shielding wall may be arranged on another adjacent partition wall facing the second recess formed in one of the partition walls arranged in the plurality of rows.

The battery pack may further include a bus bar which is disposed between the partition walls arranged in the plurality of rows and includes a first ground line connected to an anode of the battery cell and a second ground line connected to a cathode of the battery cell.

The first ground line may be inserted into the first recess and is connected to the anode of the battery cell, and the second ground line may be inserted into the second recess and is connected to the cathode of the battery cell.

The battery pack may further include a module cover which surrounds the partition wall and the bus bar and is coupled to the module frame.

The module frame may include: a lower frame in which a lower cell mounting portion on which a lower portion of the battery cell is seated is formed; and an upper frame in which an upper cell mounting portion to which an upper portion of the battery cell is fixed is formed.

### [Advantageous Effect]

According to the embodiment of the present invention, even though a spark or flame occurs in a specific battery cell, the spread of such a spark or flame to other battery cells can be effectively blocked.

This ultimately prevents a risk that the battery pack and an operating equipment such as an electric vehicle equipped with the battery pack are burned down, thereby expecting an effect of improving product stability.

### [Description of Drawings]

FIG. 1 is a view showing a partial cross-sectional structure of a conventional battery module on which a plurality of battery cells is mounted;
FIG. 2 is a perspective view showing an external structure of a battery module in a battery pack according to an embodiment of the present invention;
FIG. 3 is an exploded perspective view of the battery module in the battery pack according to the embodiment of the present invention;
FIG. 4 is a partial plan view showing a first embodiment of a partition wall structure in the battery pack according to the embodiment of the present invention;
FIG. 5 is a partial perspective view showing the first embodiment of the partition wall structure in the battery pack according to the embodiment of the present invention;
FIG. 6 is a partial enlarged view showing one of the partition walls disclosed in FIG. 5;
FIG. 7 is a perspective view showing an external structure of the battery pack according to the embodiment of the present invention;
FIG. 8 is a partial cross-sectional view showing a structure of a battery cell which is applied to the battery pack according to the embodiment of the present invention;
FIG. 9 is a partial cross-sectional view showing an arrangement structure between the battery cell and the partition wall in the battery pack according to the embodiment of the present invention; and
FIG. 10 is a partial plan view showing a second embodiment of the partition wall structure in the battery pack according to the embodiment of the present invention.

### [Mode for Invention]

The features, advantages and method for accomplishment of the present invention will be more apparent from referring to the following detailed embodiments described as well as the accompanying drawings. However, the present invention is not limited to the embodiment to be disclosed below and is implemented in different and various forms. The embodiments bring about the complete disclosure of the present invention and are provided to make those skilled in the art fully understand the scope of the present invention. The present invention is just defined by the scope of the appended claims.

Since the shapes, sizes, proportions, angles, numbers, etc., disclosed in the drawings for describing the embodiments of the present invention are illustrative, the present invention is not limited to the shown details. The same reference numerals throughout the disclosure correspond to the same elements. Also, throughout the description of the present invention, the detailed description of known technologies incorporated herein will be omitted when it may make the subject matter of the present invention unclear. Terms such as "includes", "has", "composed", etc., mentioned in the present disclosure are used, other parts can be added unless a term "only" is used. A component represented in a singular form includes the expression of plural form thereof unless otherwise explicitly mentioned.

In construing components, error ranges are construed as being included even unless otherwise explicitly mentioned.

While terms such as the first and the second, etc., can be used to describe various components, the components are not limited by the terms mentioned above. The terms are used only for distinguishing between one component and other components. Therefore, the first component to be described below may be the second component within the scope of the present invention.

The same reference numerals throughout the disclosure correspond to the same elements.

The size and thickness of each component shown in the drawings may be provided for convenience of description, and the present invention is not necessarily limited to the size and thickness.

The features of the various embodiments of the present invention can be partially or entirely coupled to or combined with each other, and as those skilled in the art can fully understand, the features can be technically and variously connected and driven. Also, the embodiments can be implemented independently of each other or together in an association relationship.

In the case of positional relationships described below, an upper part may mean an upper portion, an upper surface, etc., of a specific component, and a lower part may mean a lower portion, a lower surface, etc., of a specific component.

An upward direction may mean an upper direction or up direction of a specific component, and may be a +Z axis direction to which the coordinates disclosed in the drawing are applied. A downward direction may mean a lower direction or down direction of a specific component, and may be a -Z axis direction to which the coordinates disclosed in the drawing are applied.

A row direction P in which a plurality of battery cells 400 or a plurality of partition walls 300 described below are arranged may be a direction in which the plurality of battery cells 400 or the plurality of partition walls 300 are arranged in a plurality of rows, and may be a Y axis direction to which the coordinates disclosed in the drawing are applied. Also, a width direction T may be perpendicular to the row direction P in the plurality of battery cells 400 or the plurality of partition walls 300 arranged in a single row, and may be an X-axis direction to which the coordinates disclosed in the drawing are applied.

Hereinafter, preferred embodiments of a battery pack according to the present invention will be described in detail with reference to the attached drawings.

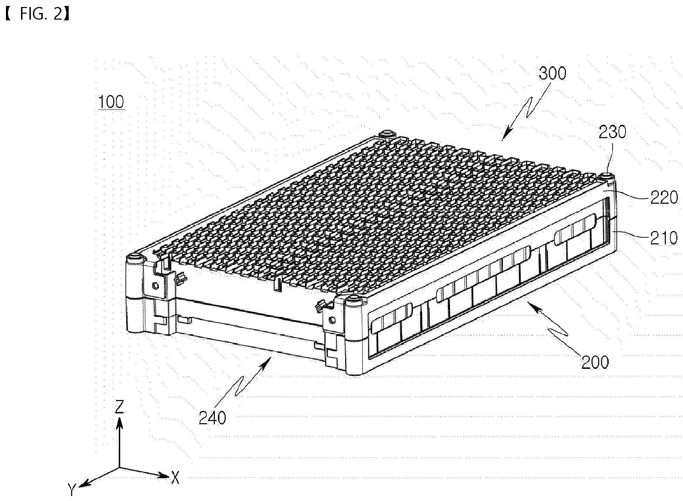

Referring to FIGS. 2 to 7, a battery pack 700 according to the embodiment of the present invention may include a plurality of battery cells 400, a module frame 200, a partition wall 300, a bus bar 500, and a module cover 720 and a control module 710.

The plurality of battery cells 400 may be secondary batteries, and may include a lithium-ion battery, a lithium polymer battery, a nickel cadmium battery, a nickel hydrogen battery, a nickel zinc battery, etc. The plurality of battery cells 400 may include other charging type batteries.

The module frame 200 may form the overall exterior of the battery pack 700, may receive the plurality of battery cells 400, and may protect the plurality of battery cells 400 from external impact. **In** the embodiment of the present invention, the module frame 200 may include a lower frame 210 and an upper frame 220. The lower frame 210 and the upper frame 220 may be assembled by using a fastener 230 such as a bolt, etc.

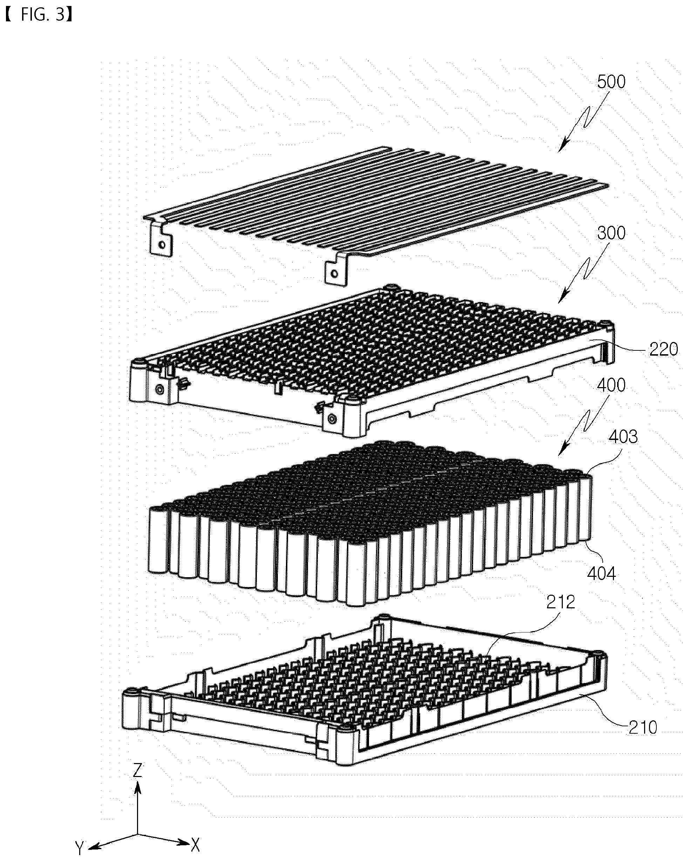

A lower cell mounting portion 212 (see FIG. 3) in which a lower portion 404 of the plurality of battery cells 400 is seated and fixed may be formed on an inner bottom surface of the lower frame 210. Here, the lower cell mounting portion 212 may be in the form of a block protruding in the upward direction (+Z), and the inside of the block may have a shape corresponding to the lower portion 404 of the battery cell 400 and may support and fix the lower portion 404 of the battery cell 400.

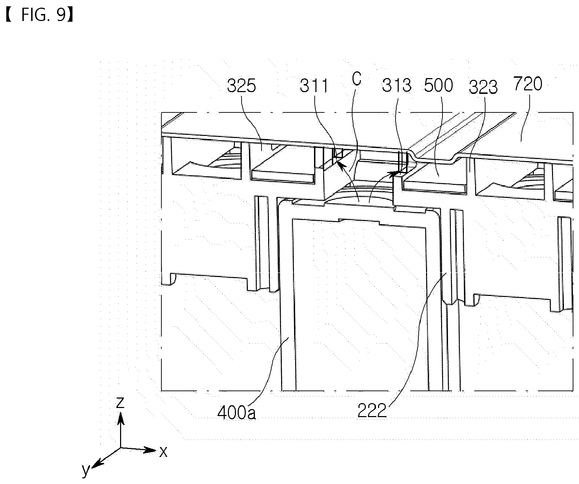

Also, an upper cell mounting portion 222 (see FIG. 9) to which an upper portion 403 of the plurality of battery cells 400 is fixed may be formed on an inner top surface of the upper frame 220. Here, the upper cell mounting portion 222 may be in the form of a block protruding in the downward direction (-Z), and the inside of the block may have a shape corresponding to the upper portion 403 of the battery cell 400 and may support and fix the upper portion 403 of the battery cell 400.

The plurality of battery cells 400 may be arranged in a plurality of rows within the module frame 200. Here, the plurality of battery cells 400 may be arranged in such a manner that odd-numbered rows and even-numbered rows cross each other for the purpose of space efficiency and a flame spread prevention structure.

Also, the partition walls 300 may be arranged on the top of the module frame 200 in a plurality of rows at positions corresponding respectively to the rows that the plurality of battery cells 400 forms. Accordingly, the partition wall 300 may also be arranged in such a manner that odd-numbered rows and even-numbered rows cross each other.

The bus bar 500 is disposed between the partition walls 300 arranged in the plurality of rows, and may include a first ground line 510 connected to an anode 402 of the battery cell 400 and a second ground line 520 connected to a cathode 401 of the battery cell 400.

Next, the partition wall 300 may be disposed on at least a portion of the top or bottom of the module frame 200 and may shield at least a portion of the battery cell 400. According to this configuration, when a flame occurs **in** some battery cells among the plurality of battery cells 400, the partition wall 300 is able to perform a function of blocking the flame from spreading to other battery cells.

Here, the meaning of "a portion" used in the embodiments of the present invention may include an upper portion, a lower portion, and upper and lower portions of a corresponding component. Therefore, what a component is disposed on at least a portion of the top or bottom of the module frame 200 may mean that the component may be disposed on the top or bottom of the module frame 200, or on the top and bottom through a combination thereof.

Hereinafter, the meaning that the partition wall 300 is disposed on a portion of the module frame 200 will be described based on the fact that the partition wall 300 is disposed on the module frame 200, but is not limited thereto.

Also, a portion of the battery cell 400 is described as referring to the upper portion 403 of the battery cell 400, but is not limited thereto.

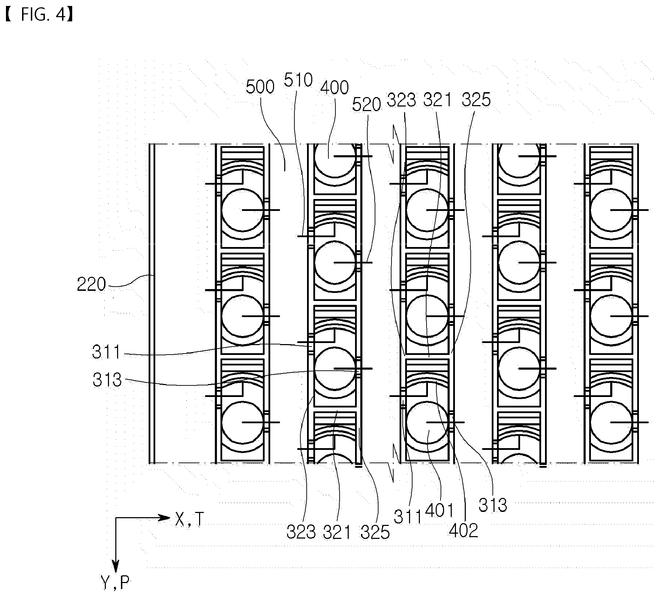

Referring to FIGS. 4 to 6, the partition wall 300 may include a center wall 321, a first shielding wall 323, a second shielding wall 325, a through portion 340, a first recess 311, and a second recess 313.

First, the center wall 321 may be disposed in the width direction T of the partition wall 300 between adjacent battery cells among the plurality of battery cells 400, and may perform a shielding wall function between adjacent battery cells arranged in the same row.

That is, even if a fire occurs in one of the battery cells 400, the center wall 321 functions as a shielding wall to prevent flames from the fire from spreading to adjacent battery cells arranged in the same row.

Also, the first shielding wall 323 is connected to one side 321b of the center wall 321 and may be arranged in the row direction P formed by the plurality of battery cells 400. Also, the second shielding wall 325 is connected to the other side 321c of the center wall 321 and may be arranged in the row direction P formed by the plurality of battery cells 400.

Next, the through portion 340 may open the upper portion 403 of the battery cell 400 and may be disposed to be surrounded by the center wall 321 and the first and second shielding walls 323 and 325.

Here, a top surface 323a of the first shielding wall 323 and a top surface 325a of the second shielding wall 325 may be placed on the same plane as a top surface 321a of the center wall 321. Also, since the module cover 720 is coupled to the tops of the center wall 321 and the first and second shielding walls 323 and 325, the center wall 321, the first and second shielding walls 323 and 325, and the module cover 720 can basically block the flame from spreading to other battery cells even if a fire occurs in one battery cell.

Next, the first recess 311 may be formed in the first shielding wall 323, and the second recess 313 may be formed in the second shielding wall 325. The first and second recesses 311 and 313 may be formed to electrically connect the bus bar 500 and the battery cell 400.

Referring to FIG. 4, in the embodiment of the present invention, the first ground line 510 of the bus bar 500 may be inserted into the first recess 311 and may be connected to the anode 402 of the battery cell 400. Also, the second ground line 520 of the bus bar 500 may be inserted into the second recess 313 and may be connected to the cathode 401 of the battery cell 400.

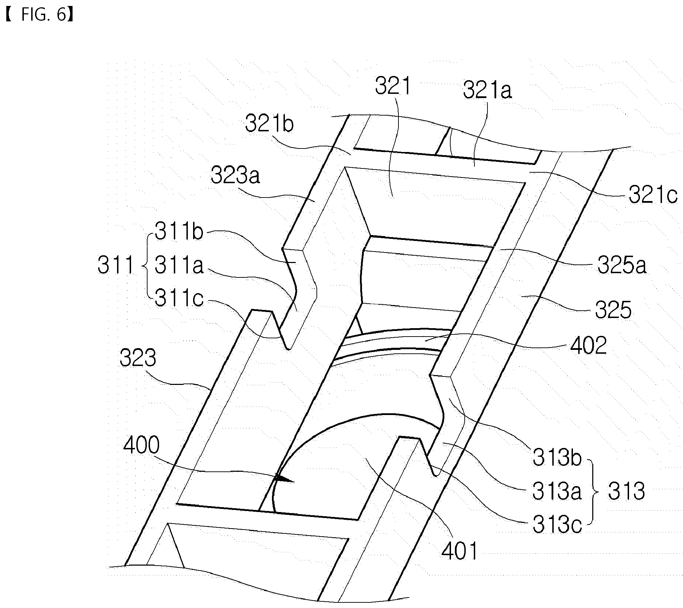

Here, referring to FIG. 6, a bottom surface 311a of the first recess 311 may be formed horizontally such that the first ground line 510 can be seated and supported. Both side surfaces 311b and 311c of the first recess 311 may be formed perpendicular to the bottom surface 311a. Accordingly, as shown in FIG. 3, when the bus bar 500 is assembled by being seated on the upper frame 220, the first ground line 510 can be stably inserted from above into the bottom surface 311a of the first recess 311.

Likewise, a bottom surface 313a of the second recess 313 may be formed horizontally such that the second ground line 520 can be seated and supported. Both side surfaces 313b and 313c of the second recess 313 may be formed perpendicular to the bottom surface 313a. Accordingly, when the bus bar 500 is assembled by being seated on the upper frame 220, the second ground line 520 can be stably inserted from above into the bottom surface 313a of the second recess 313.

Here, the first recess 311 and the second recess 313 may be disposed at different positions on the basis of the row direction P. This can be designed by considering the position of the anode 402 and the position of the cathode 401 in the battery cell 400.

That is, in the embodiment of the present invention, the first recess 311 may be disposed adjacent to the anode 402 of the battery cell 400 in the first shielding wall 323. This may be a result of considering the position and shape of the first ground line 510 which is inserted into the first recess 311 and is grounded to the anode 402 of the battery cell 400.

The second recess 313 may be disposed adjacent to the cathode 401 of the battery cell 400 in the second shielding wall 325. This may be a result of considering the position and shape of the second ground line 520 which is inserted into the second recess 313 and is grounded to the cathode 401 of the battery cell 400.

Also, the first recess 311 and the second recess 313 are disposed at different positions on the basis of the row direction P. This intends to delay the spread of flame when a fire occurs in a specific battery cell.

That is, when a fire occurs in a specific battery cell 400, a flame occurring adjacent to the cathode 401 in the specific battery cell 400 is first emitted through the second recess 313, and then reaches the first recess 311 at a time interval and is emitted through the first recess 311. Therefore, the spread of the flame can be delayed at a short time interval.

Likewise, a flame occurring adjacent to the anode 402 in the specific battery cell 400 is first emitted through the first recess 311, and then reaches the second recess 313 at a time interval and is emitted through the second recess 313. Therefore, the spread of the flame can also be delayed at a short time interval.

Considering that a spark or flame caused by a fire in the battery cell spreads instantly, despite a short time interval for delay, there is a great effect of delaying the spread of the spark or flame.

Referring to FIGS. 4 to 6, a first embodiment of the structure of the partition wall 300 is shown.

In the first embodiment of the structure of the partition wall 300, the second shielding wall 325 may be arranged on another adjacent partition wall 300 facing the first recess 311 formed in one of the partition walls 300 arranged in the plurality of rows, and the first shielding wall 323 may be arranged on another adjacent partition wall 300 facing the second recess 313 formed in one of the partition walls 300 arranged in the plurality of rows.

In conjunction with the arrangement structure of the first and second recesses 311 and 313 described above, the first shielding wall 323 or the second shielding wall 325 included in the partition wall 300 which forms any one row among the partition walls 300 arranged in the plurality of rows, and the first shielding wall 323 or the second shielding wall 325 included in the partition wall 300 which forms another adjacent row may be arranged at different positions on the basis of the row direction P.

Referring to FIG. 4, the first ground line 510 inserted into the first recess 311 is formed in a bent shape and is connected to the anode 402 of the battery cell 400. The second ground line 520 inserted into the second recess 313 is formed in a straight line and is connected to the cathode 401 of the battery cell 400.

Also, the second shielding wall 325 is formed in another adjacent row facing the first recess 311 arranged in one row, and the first shielding wall 323 is formed in another adjacent row facing the second recess 313 arranged in one row.

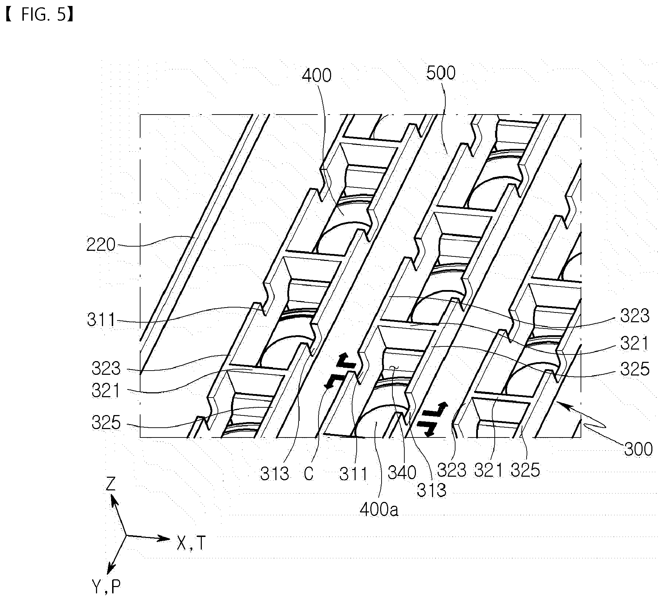

Referring to FIG. 5, FIG. 5 shows that a specific battery cell 400a is damaged and burned and the flame (see arrow C) spreads to the first and second recesses 311 and 313 through the through portion 340.

The flame is blocked and does not spread in a portion sealed by the center wall 321 and the first and second shielding walls 323 and 325 in the through portion 340. However, in order to electrically connect the bus bar 500 and the battery cell 400, the first recess 311 and the second recess 313 must be formed in both sides of the partition wall 300 such that the first and second ground lines 510 and 520 of the bus bar 500 are inserted and connected to the battery cell 400.

However, when a fire occurs in the specific battery cell 400a, the first and second recesses 311 and 313 function as a passage through which the flame spreads. Therefore, even if the flame spreads through the first and second recesses 311 and 313, it is required to block the flame from flowing into other adjacent battery cells 400.

Therefore, in the first embodiment of the structure of the partition wall 300, the second shielding wall 325 is arranged to face the first recess 311 in another adjacent row facing the first recess 311 formed in the partition wall 300 in one row, so that the flame emitted through the first recess 311 is prevented from spreading by being blocked by the second shielding wall 325.

Also, the first shielding wall 323 is arranged to face the second recess 313 in another adjacent row facing the second recess 313 formed in the partition wall 300 in one row, so that the flame emitted through the second recess 313 is prevented from spreading by being blocked by the first shielding wall 323.

Referring to FIG. 5, FIG. 5 shows that the flame (see arrow C) emitted from the specific battery cell 400a where a fire has occurred to the first and second recesses 311 and 313 through the through portion 340 is blocked by the first and second shielding walls 323 and 325 formed in adjacent rows, respectively, and is prevented from spreading to other battery cells 400.

As such, in the embodiment of the present invention, through the above-described structure, even though a fire occurs in some of the plurality of battery cells 400, the flame is effectively blocked from spreading to other adjacent battery cells, thereby preventing the battery pack 700 from being burned down.

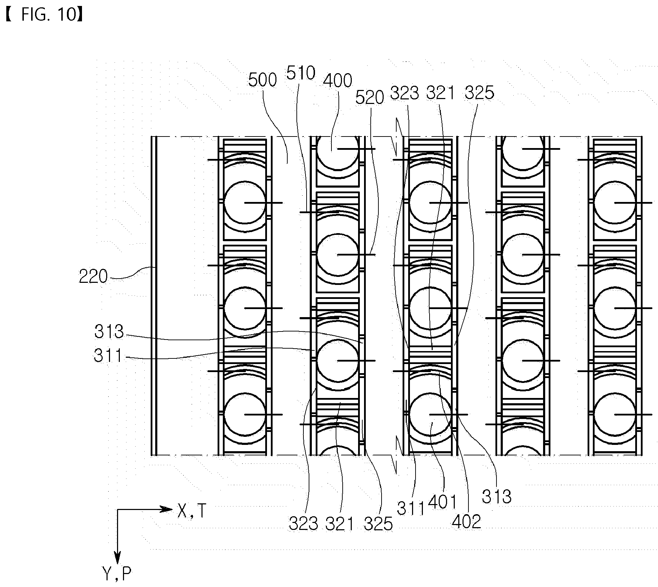

Meanwhile, FIG. 10 shows a second embodiment of the structure of the partition wall 300. Referring to FIG. 10, in the second embodiment of the structure of the partition wall 300, the first ground line 510 of the bus bar 500 may not be bent and may be formed in a straight shape in the same manner as the second ground line 520. In this case, the first recess 311 may be further extended to the anode 402 of the battery cell 400 than the first embodiment of the structure of the partition wall 300.

That is, the sizes, positions, etc., of the first and second recesses 311 and 313 may be changed in correspondence with the positions or shapes of the first and second ground lines 510 and 520 of the bus bar 500. Also, the sizes, positions, etc., of the first and second recesses 311 and 313 may be changed in correspondence with other types of bus bars 500.

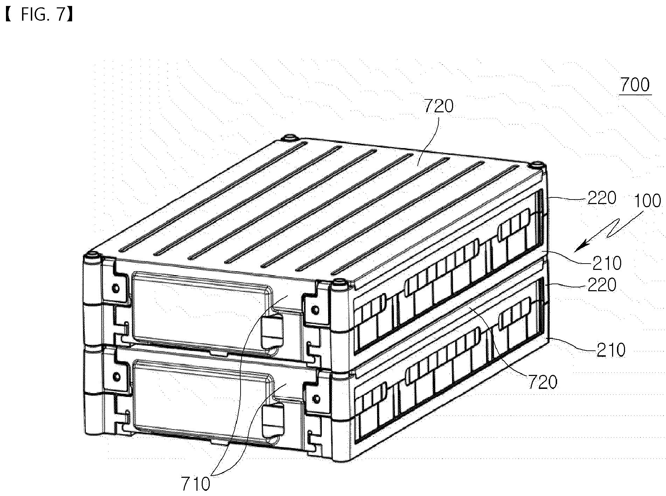

Next, referring to FIG. 7, the module cover 720 surrounds the partition wall 300 and the bus bar 500 and may be coupled to the upper frame 220. Also, the control module 710 is mounted on a control module mounting unit 240 (see FIG. 2) and may control the plurality of battery cells 400.

Also, in the embodiment of the present invention, a battery module 100 and the control module 710 may be stacked in multiple layers. FIG. 7 shows the battery pack is formed by stacking two layers, but is not limited thereto. The battery pack may be formed by stacking or arranging a different number of layers depending on a design capacity.

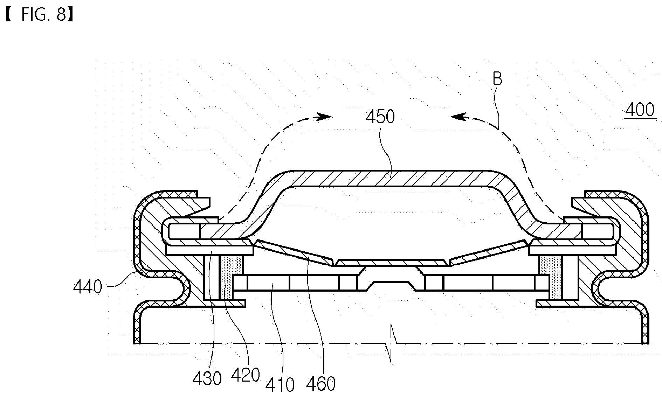

For reference, FIG. 8 shows a partial cross-sectional structure of the cylindrical battery cell 400 mounted on the battery module 100 in the embodiment of the present invention.

Referring to FIG. 8, the cylindrical battery cell 400 applied to the embodiment of the present invention may include a current blocking device 410, a gasket 420, a thermal-resistant member 430, a shield 440, an upper cap 450, and a bent plate 460.

The current blocking device 410 may be a current interrupt device (CID), which may be a device that of which the temperature rises when an overcurrent flows and which automatically disconnects the contact point. Also, the gasket 420 may be disposed along the perimeter of the current blocking device 410 and may prevent leakage of internal materials of the battery cell 400.

The thermal-resistant member 430 may perform a function of protecting the battery cell 400 from external heat, and the shield 440 may form the exterior of the battery cell 400 and may perform a function of protecting the battery cell 400 from external impact.

The upper cap 450 may be disposed on the top of the battery cell 400 and may form an anode. The upper cap 450 may also perform a function of protecting the internal materials of the battery cell 400. Also, the bent plate 460 may be disposed between the upper cap 450 and the current blocking device 410.

If an abnormality occurs in the battery cell 400, a flame may occur and spread as shown by an arrow B. The abnormality problem of the battery cell 400 causes damage to the separator due to a design error of the battery cell 400 itself and the anode and cathode materials react, so that a fire occurs. Alternatively, a fire may occur due to overcharging or overload caused by software errors or incorrect settings of the operating equipment. Also, the flame of the battery cell 400 sealed within the battery module 100 may spread upward as shown by the arrow B.

FIG. 9 shows a partial cross-sectional view showing an assembly structure between the battery cell 400 and the partition wall 300 in the battery pack 700 of the present invention.

Referring to FIG. 9, the battery cell 400 is fixed to the upper cell mounting portion 222. A flame occurs in a specific battery cell 400a, and the flame C moving through the through portion 340 of the partition wall 300 in the upward direction Z is blocked by the module cover 720 and spreads to the outside through the first recess 311 or the second recess 313.

As described above, since the center wall 321 is formed, the flame does not spread to other adjacent battery cells 400 arranged in the same row.

Also, the flame C which spreads outward through the first recess 311 faces the second shielding wall 325 and does not spread to the battery cell 400 disposed below the adjacent partition wall 300.

Also, the flame C which spreads outward through the second recess 313 faces the first shielding wall 323 and does not spread to the battery cell 400 disposed below the adjacent partition wall 300.

Eventually, even if a fire occurs in the specific battery cell 400a, the flame of the battery cell 400a is blocked without spreading to another battery cell 400, thereby preventing the entire battery pack 700 from being burned down.

In particular, the plurality of battery cells 400 is mounted within the battery module 100. Therefore, even if a fire occurs in the specific battery cell 400a and the battery cell 400a fails to fulfill its function, the remaining battery cells 400 continue to produce power, so that there is no difficulty in operating the battery pack 700.

Ultimately, as the product stability of the battery pack 700 increases, a risk that a fire occurs in equipment or facility where the battery pack 700 is mounted and operated can be reduced and casualty accidents can be reduced.

The above descriptions merely show a specific embodiment of the battery pack.

Therefore, it is clear that those skilled in the art can easily understand that the present invention can be substituted and modified in various forms without departing from the scope of the present invention disclosed in the following claims.

### [Industrial Applicability]

The present invention relates to a battery pack and has industrial applicability.

## Claims

1. A battery pack (700) comprising:
a plurality of battery cells (400);
a module frame (200) configured to receive the plurality of battery cells (400); and
a partition wall (300) configured to be disposed on at least a portion of a top or bottom of the module frame (200) and to shield at least a portion of the battery cell (400),
wherein, even when a flame occurs in some battery cells (400) among the plurality of battery cells (400), the partition wall (300) blocks the flame from spreading to other battery cells (400),
wherein the plurality of battery cells (400) is arranged in a plurality of rows within the module frame (200), and
wherein the partition wall (300) is arranged on at least a portion of the top or bottom of the module frame (200) in a plurality of rows at positions corresponding respectively to rows that the plurality of battery cells (400) forms,
wherein the partition wall (300) comprises:
a center wall (321) which is disposed between adjacent battery cells (400) among the plurality of battery cells (400);
a first shielding wall (323) which is connected to one side of the center wall (321) and is arranged in a row direction (P) formed by the plurality of battery cells (400);
a second shielding wall (325) which is connected to the other side of the center wall (321) and is arranged in the row direction (P) formed by the plurality of battery cells (400); and
a through portion (340) which opens at least a portion of the battery cell (400) and is disposed to be surrounded by the center wall (321) and the first and second shielding walls (323, 325),
wherein the partition wall (300) further comprises:
a first recess (311) formed in the first shielding wall (323); and
a second recess (313) formed in the second shielding wall (325),
wherein the first recess (311) and the second recess (313) are disposed at different positions on the basis of the row direction (P),
so that, when a flame occurs in some battery cells (400) among the plurality of battery cells (400), the flame is emitted through the first recess (311) and the second recess (313) at a time interval, so that spread of the flame is delayed.

2. The battery pack (700) of claim 1, wherein the first shielding wall (323) or the second shielding wall (325) included in the partition wall (300) which forms any one row among the partition walls (300) arranged in the plurality of rows, and the first shielding wall (323) or the second shielding wall (325) included in the partition wall (300) which forms another adjacent row are arranged at different positions on the basis of the row direction (P)

3. The battery pack (700) of claim 1, wherein the first recess (311) is disposed adjacent to an anode (402) of the battery cell (400) in the first shielding wall (323), and the second recess (313) is disposed adjacent to a cathode (401) of the battery cell (400) in the second shielding wall (325).

4. The battery pack (700) of claim 3,
wherein the second shielding wall (325) is arranged on another adjacent partition wall (300) facing the first recess (311) formed in one of the partition walls (300) arranged in the plurality of rows, and
wherein the first shielding wall (323) is arranged on another adjacent partition wall (300) facing the second recess (313) formed in one of the partition walls (300) arranged in the plurality of rows.

5. The battery pack (700) of claim 1, further comprising a bus bar (500) which is disposed between the partition walls (300) arranged in the plurality of rows and includes a first ground line (510) connected to an anode (402) of the battery cell (400) and a second ground line (520) connected to a cathode (401) of the battery cell (400).

6. The battery pack (700) of claim 5, wherein the first ground line (510) is inserted into the first recess (311) and is connected to the anode (402) of the battery cell (400), and the second ground line (520) is inserted into the second recess (313) and is connected to the cathode (401) of the battery cell (400).

7. The battery pack (700) of claim 5, further comprising a module cover (720) which surrounds the partition wall (300) and the bus bar (500) and is coupled to the module frame (200).

8. The battery pack (700) of claim 1, wherein the module frame (200) comprises:
a lower frame (210) in which a lower cell mounting portion (212) on which a lower portion (404) of the battery cell (400) is seated is formed; and
an upper frame (220) in which an upper cell mounting portion (222) to which an upper portion (403) of the battery cell (400) is fixed is formed.

## Patentansprüche

1. Batteriepack (700), umfassend:
mehrere Batteriezellen (400);
einen Modulrahmen (200), der dazu eingerichtet ist, die mehreren Batteriezellen (400) aufzunehmen; und
eine Trennwand (300), die dazu eingerichtet ist, an mindestens einem Abschnitt einer Oberseite oder Unterseite des Modulrahmens (200) angeordnet zu sein und mindestens einen Abschnitt der Batteriezelle (400) abzuschirmen,
wobei die Trennwand (300) selbst dann, wenn in einigen Batteriezellen (400) unter den mehreren Batteriezellen (400) eine Flamme entsteht, verhindert, dass sich die Flamme zu anderen Batteriezellen (400) ausbreitet,
wobei die mehreren Batteriezellen (400) in mehreren Reihen innerhalb des Modulrahmens (200) angeordnet sind, und
wobei die Trennwand (300) an mindestens einem Abschnitt der Oberseite oder Unterseite des Modulrahmens (200) in mehreren Reihen an Positionen angeordnet ist, die jeweils Reihen entsprechen, die durch die mehreren Batteriezellen (400) gebildet werden,
wobei die Trennwand (300) umfasst:
eine Mittenwand (321), die zwischen benachbarten Batteriezellen (400) unter den mehreren Batteriezellen (400) angeordnet ist;
eine erste Abschirmwand (323), die mit einer Seite der Mittenwand (321) verbunden ist und in einer durch die mehreren Batteriezellen (400) gebildeten Reihenrichtung (P) angeordnet ist;
eine zweite Abschirmwand (325), die mit der anderen Seite der Mittenwand (321) verbunden ist und in der durch die mehreren Batteriezellen (400) gebildeten Reihenrichtung (P) angeordnet ist; und
einen Durchgangsabschnitt (340), der mindestens einen Abschnitt der Batteriezelle (400) öffnet und so angeordnet ist, dass er von der Mittenwand (321) und der ersten und der zweiten Abschirmwand (323, 325) umgeben ist,
wobei die Trennwand (300) des Weiteren umfasst:
eine erste Aussparung (311), die in der ersten Abschirmwand (323) gebildet ist; und
eine zweite Aussparung (313), die in der zweiten Abschirmwand (325) gebildet ist,
wobei die erste Aussparung (311) und die zweite Aussparung (313) an verschiedenen Positionen auf der Grundlage der Reihenrichtung (P) angeordnet sind,
so dass, wenn in einigen Batteriezellen (400) unter den mehreren Batteriezellen (400) eine Flamme entsteht, die Flamme mit einem Zeitintervall durch die erste Aussparung (311) und die zweite Aussparung (313) hindurch austritt, so dass eine Ausbreitung der Flamme verzögert wird.

2. Batteriepack (700) nach Anspruch 1, wobei die erste Abschirmwand (323) oder die zweite Abschirmwand (325), die in der Trennwand (300) enthalten ist, die unter den in mehreren Reihen angeordneten Trennwänden (300) eine Reihe bildet, und die erste Abschirmwand (323) oder die zweite Abschirmwand (325), die in der Trennwand (300) enthalten ist, die eine andere benachbarte Reihe bildet, an verschiedenen Positionen auf der Grundlage der Reihenrichtung (P) angeordnet sind.

3. Batteriepack (700) nach Anspruch 1, wobei die erste Aussparung (311) neben einer Anode (402) der Batteriezelle (400) in der ersten Abschirmwand (323) angeordnet ist und die zweite Aussparung (313) neben einer Kathode (401) der Batteriezelle (400) in der zweiten Abschirmwand (325) angeordnet ist.

4. Batteriepack (700) nach Anspruch 3,
wobei die zweite Abschirmwand (325) an einer anderen benachbarten Trennwand (300) angeordnet ist, die der ersten Aussparung (311) zugewandt ist, die in einer der in den mehreren Reihen angeordneten Trennwände (300) gebildet ist, und
wobei die erste Abschirmwand (323) an einer anderen benachbarten Trennwand (300) angeordnet ist, die der zweiten Aussparung (313) zugewandt ist, die in einer der in den mehreren Reihen angeordneten Trennwände (300) gebildet ist.

5. Batteriepack (700) nach Anspruch 1, des Weiteren umfassend eine Sammelschiene (500), die zwischen den in den mehreren Reihen angeordneten Trennwänden (300) angeordnet ist und eine erste Erdungsleitung (510), die mit einer Anode (402) der Batteriezelle (400) verbunden ist, und eine zweite Erdungsleitung (520), die mit einer Kathode (401) der Batteriezelle (400) verbunden ist, aufweist.

6. Batteriesatz (700) nach Anspruch 5, wobei die erste Erdungsleitung (510) in die erste Aussparung (311) eingeführt ist und mit der Anode (402) der Batteriezelle (400) verbunden ist und die zweite Erdungsleitung (520) in die zweite Aussparung (313) eingeführt ist und mit der Kathode (401) der Batteriezelle (400) verbunden ist.

7. Batteriesatz (700) nach Anspruch 5, des Weiteren umfassend eine Modulabdeckung (720), die die Trennwand (300) und die Sammelschiene (500) umgibt und mit dem Modulrahmen (200) gekoppelt ist.

8. Batteriepack (700) nach Anspruch 1, wobei der Modulrahmen (200) umfasst:
einen unteren Rahmen (210), in dem ein unterer Zellenmontageabschnitt (212) gebildet ist, auf dem ein unterer Abschnitt (404) der Batteriezelle (400) aufliegt; und
einen oberen Rahmen (220), in dem ein oberer Zellmontageabschnitt (222) gebildet ist, an dem ein oberer Abschnitt (403) der Batteriezelle (400) befestigt ist.

## Revendications

1. Bloc-batterie (700) comprenant :
une pluralité de cellules de batterie (400) ;
un châssis de module (200) configuré pour recevoir la pluralité de cellules de batterie (400) ; et
une paroi de séparation (300) configurée pour être disposée sur au moins une partie d'un dessus ou d'un dessous du châssis de module (200) et pour protéger au moins une partie des cellules de batterie (400),
dans lequel, même lorsqu'une flamme apparaît dans certaines cellules de batterie (400) parmi la pluralité de cellules de batterie (400), la paroi de séparation (300) empêche la flamme de se propager à d'autres cellules de batterie (400),
dans lequel la pluralité de cellules de batterie (400) est agencée en une pluralité de rangées à l'intérieur du châssis de module (200), et
dans lequel la paroi de séparation (300) est agencée sur au moins une partie du dessus ou du dessous du châssis de module (200) en une pluralité de rangées à des emplacements correspondant respectivement à des rangées que forme la pluralité de cellules de batterie (400),
dans lequel la paroi de séparation (300) comprend :
une paroi centrale (321) qui est disposée entre des cellules de batterie adjacentes (400) parmi la pluralité de cellules de batterie (400) ;
une première paroi de protection (323) qui est reliée à l'un des côtés de la paroi centrale (321) et qui est agencée dans une direction de rangées (P) formée par la pluralité de cellules de batterie (400) ;
une seconde paroi de protection (325) qui est reliée à l'autre côté de la paroi centrale (321) et qui est agencée dans la direction de rangées (P) formée par la pluralité de cellules de batterie (400) ; et
une partie traversante (340) qui laisse apparaître au moins une partie de la cellule de batterie (400) et qui est disposée de manière à être entourée par la paroi centrale (321) et par les première et seconde parois de protection (323, 325),
dans lequel la paroi de séparation (300) comprend en outre :
un premier évidement (311) formé dans la première paroi de protection (323) ; et
un second évidement (313) formé dans la seconde paroi de protection (325),
dans lequel le premier évidement (311) et le second évidement (313) sont disposés à des positions différentes par rapport à la direction de rangées (P),
de sorte que, lorsqu'une flamme apparaît dans certaines cellules de batterie (400) parmi la pluralité de cellules de batterie (400), la flamme soit émise à travers le premier évidement (311) et le second évidement (313) à un intervalle de temps, de sorte que la propagation de la flamme soit retardée.

2. Bloc-batterie (700) selon la revendication 1, dans lequel la première paroi de protection (323) ou la seconde paroi de protection (325) comprise dans la paroi de séparation (300) qui forme une rangée quelconque parmi les parois de séparation (300) agencées en la pluralité de rangées, et la première paroi de protection (323) ou la seconde paroi de protection (325) comprise dans la paroi de séparation (300) qui forme une autre rangée adjacente sont agencées à des positions différentes par rapport à la direction de rangées (P).

3. Bloc-batterie (700) selon la revendication 1, dans lequel le premier évidement (311) est disposé à proximité d'une anode (402) de la cellule de batterie (400) dans la première paroi de protection (323), et le second évidement (313) est disposé à proximité d'une cathode (401) de la cellule de batterie (400) dans la seconde paroi de protection (325).

4. Bloc-batterie (700) selon la revendication 3,
dans lequel la seconde paroi de protection (325) est agencée sur une autre paroi de séparation adjacente (300) faisant face au premier évidement (311) formé dans l'une des parois de séparation (300) agencées en la pluralité de rangées, et
dans lequel la première paroi de protection (323) est agencée sur une autre paroi de séparation adjacente (300) faisant face au second évidement (313) formé dans l'une des parois de séparation (300) agencées en la pluralité de rangées.

5. Bloc-batterie (700) selon la revendication 1, comprenant en outre une barre omnibus (500) qui est disposée entre les parois de séparation (300) agencées en la pluralité de rangées et qui comporte une première ligne de terre (510) reliée à une anode (402) de la cellule de batterie (400) et une seconde ligne de terre (520) reliée à une cathode (401) de la cellule de batterie (400).

6. Bloc-batterie (700) selon la revendication 5, dans lequel la première ligne de terre (510) est insérée dans le premier évidement (311) et est reliée à l'anode (402) de la cellule de batterie (400), et la ligne de terre (520) est insérée dans le second évidement (313) et est reliée à la cathode (401) de la cellule de batterie (400).

7. Bloc-batterie (700) selon la revendication 5, comprenant en outre un couvercle de module (720) qui entoure la paroi de séparation (300) et la barre omnibus (500) et qui est accouplé au châssis de module (200).

8. Bloc-batterie (700) selon la revendication 1, dans lequel le châssis de module (200) comprend :
un châssis inférieur (210) dans lequel est formée une partie de montage de cellule inférieure (212) sur laquelle une partie inférieure (404) de la cellule de batterie (400) est assisse ; et
un châssis supérieur (220) dans lequel est formée une partie de montage de cellule supérieure (222) à laquelle une partie supérieure (403) de la cellule de batterie (400) est fixée.
